# EUROPÄISCHE PATENTSCHRIFT

(11) **EP 1 445 273 B1**
(45) Veröffentlichungstag und Bekanntmachung des Hinweises auf die Patenterteilung: **21.05.2008**
(21) Anmeldenummer: 04001140.5
(22) Anmeldetag: 21.01.2004
(51) Int. Cl.: C08G 77/38, C08G 77/46

(54) **Lineare carboxyfunktionelle Organosiloxanylderivate und deren Verwendung zur Behandlung der Oberflächen von Leder**
Linear carboxyfunctional Organosiloxanes and their use for the surface treatment of leather
Dérivés d'Organosiloxanes linéaires présentant une fonction carboxy et leur utilisation dans le traitement de surfaces en cuir

(30) Priorität: 04.02.2003 DE 10304330
(43) Veröffentlichungstag der Anmeldung: 11.08.2004
(73) Patentinhaber: Evonik Goldschmidt GmbH, 45127 Essen (DE)
(72) Erfinder: Buskies-Keup, Heike, 45130 Essen (DE); Krakenberg, Manfred, 45307 Essen (DE); Oestreich, Sascha, Dr., 45279 Essen (DE); Stadtmüller, Stefan, Dr., 45309 Essen (DE)

(56) Entgegenhaltungen:
- EP-A- 0 745 141
- WO-A-93/22464
- US-B1- 6 379 751

## Beschreibung

Die Erfindung betrifft neuartige carboxyfunktionelle Organosiloxanylderivate und deren Verwendung zur Behandlung der Oberfläche von Leder.

Naturbelassenes Leder ist aufgrund seiner chemischen Struktur und seines faserigen Aufbaus anfällig gegen Schmutz und Nässe. So positiv sich seine Saugfähigkeit, Wasseraufnahmekapazität und Durchlässigkeit bei Bekleidung und Schuhwerk in Bezug auf körpereigenen Schweiß auswirkt, so negativ wird dieses Verhalten bei Einwirkung von außen kommender Nässe beurteilt.

Eine wichtige Voraussetzung für die Gebrauchsfähigkeit von Lederbekleidung bei der privaten und gewerblichen Anwendung sind seine wasserdichten oder zumindest weitgehend wasserabweisenden Eigenschaften.

Zur Erzielung dies Effekts wurden in der Vergangenheit bereits Imprägniermittel auf Basis tierischer, pflanzlicher und synthetischer Produkte eingesetzt.

Aufgrund ihrer anwendungstechnischen Eigenschaften haben sich die synthetischen Mittel weitestgehend durchgesetzt und hier insbesondere die Polysiloxane in ihren verschiedenen Modifizierungen.

Polysiloxane besitzen gegenüber Wasser eine hohe Grenzflächenspannung und lassen aufgrund der stark reduzierten Adhäsion zu Wasser dessen Kohäsionskräfte voll zur Wirkung kommen, mit dem Effekt, dass die sich bildenden Kugeln und Tropfen von der Oberfläche abperlen.

Zur Erhöhung der rein mechanischen und elektrostatischen (van der Waals) Haftungskräfte der Polysiloxane wurden funktionelle Gruppen wie insbesondere Carboxylgruppen in das Molekül eingebaut. Über diese Gruppen wird das Polysiloxan über chemische Bindungen fest an die Fasern des Leders gebunden.

Im Vergleich zu den bis dahin verwendeten Imprägniermitteln konnte eine deutliche Langzeitwirkung erzielt werden, da die hydrophobierende Schutzschicht durch Scheuern, Abrieb oder andere äußere mechanische Belastungen weniger leicht zu entfernen ist.

In der EP-A-0 745 141 wird ein Verfahren zum hydrophobieren von Leder und Pelzfellen in wässrigen Emulsionen und in Gegenwart von Emulgatoren mit kammartig carboxylfunktionalisierten Polysiloxanen beschrieben, bei denen die Carboxylgruppen über Spacergruppen in Form von linearen oder verzweigten C₂-C₄₀-Alkylengruppen, welche ebenfalls Heteroatome oder Heterogruppen enthalten können, an die Polymerhauptkette gebunden sind.

In der EP-A-0 324 345 wird ein Verfahren zum hydrophobieren von Leder, Pelzen und Lederaustauschstoffen beschrieben, gemäß dem Polysiloxane mit vorzugsweise endständigen Carboxylgruppen verwendet werden, deren Carboxylgruppen in neutralisierter Form vorliegen.

Die WO-A-93/22464 beschreibt ein Verfahren zum hydrophobieren von Leder, Pelzen und Lederaustauschstoffen unter Verwendung von aus Polyolen und Maleinsäureanhydrid und Sulfiten hergestellten Sulfobernsteinsäureestern als Hydrophobiermittel, gemäß welchem als Polyole auch alpha-/omega-OH-funktionelle Polysiloxane verwendet werden können.

Die hydrophobierende Wirkung dieser Verbindungen ist aber weiterhin verbesserungsbedürftig in Bezug auf Hydrophobierung, Flexibilität, Abriebbeständigkeit und Beständigkeit gegen extreme äußere Belastungen wie sie insbesondere bei industriell oder militärisch genutzter Arbeitskleidung, Schutzbekleidung oder dem dortigen Schuhwerk auftreten.

Aufgabe der vorliegenden Erfindung war es daher, Hydrophobierungsmittel für Leder zu finden, welche auch unter erschwerten äußeren Belastungen verbesserte anwendungstechnische Eigenschaften aufweisen.

Es ist Ziel dieser Verbindung Bekleidungsleder wasserabweisend bei voller Elastizität und Weichheit auszurüsten. Bei der Behandlung wird nicht die Lederoberfläche mit einem dünnen Film übertragen, sondern das Hydrophobierungsmittel dringt in das Leder ein und umkleidet die Lederfaser, die somit atmungsaktiv bleiben.

Diese Aufgabe wird gelöst durch Verwendung linearer carboxyfunktioneller Organosiloxanverbindungen.

Ein Gegenstand der Erfindung sind daher lineare carboxyfunktionelle Organosiloxanverbindungen der allgemeinen Formel (I) 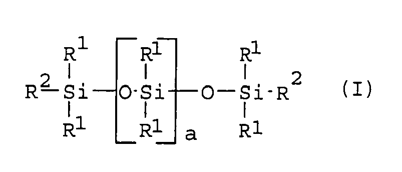 worin
- a: 1 bis 150
- R¹: gleiche oder verschiedene, aliphatische oder aromatische Kohlenwasserstoffreste sind,
- R²: - (Y) [O (C₂H_{4-b}(R³)_{b}O)_{c}(C_{d}H_{2d}O)ₑ]_{f}X

ist, mit der Bedeutung
Y (f + 1)-bindiger, gegebenenfalls verzweigter Kohlenwasserstoffrest mit 3 bis 12 C-Atomen,
b 1 bis 3,
c 0 bis 20,
d 2 bis 4,
e 0 bis 20,
f 1 bis 4,
R³ R¹,
X C(O)-Z-CO₂H ist,
Z zweiwertiger Kohlenwasserstoffrest, ausgewählt aus der Gruppe

-(CH₂)_{g}-

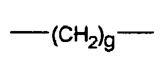

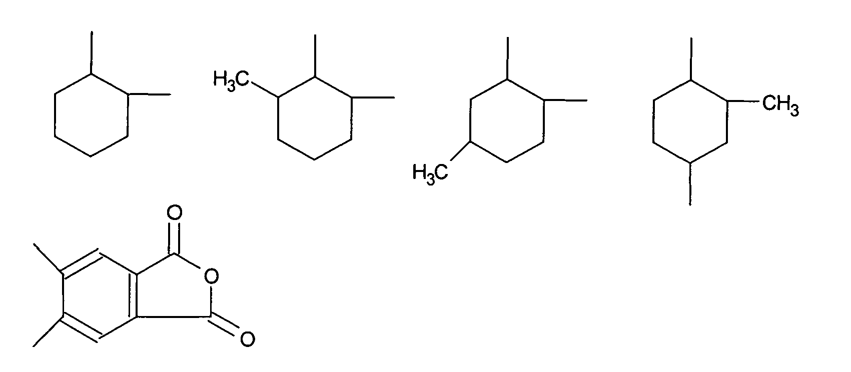

mit
g 1 bis 12.

Ein weiterer Gegenstand der Erfindung ist die Verwendung linearer carboxyfunktioneller Organosiloxanverbindungen der allgemeinen Formel (I) zur Behandlung der Oberfläche von Leder.

Weitere Gegenstände der Erfindung sind durch die Ansprüche gekennzeichnet.

Es ist dem Fachmann geläufig, dass die Verbindungen in Form eines Gemisches mit einer im wesentlichen durch statistische Gesetze geregelten Verteilung vorliegen. Die Werte für den Index a stellen deshalb Mittelwerte dar.

Erfindungsgemäße Verbindungen können in einfacher Weise hergestellt werden, in dem man hydroxyfunktionelle Siloxane der allgemeinen Formel 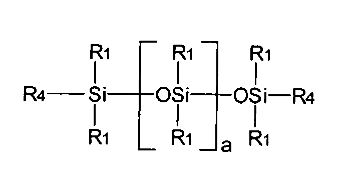 worin
- a: 1 bis 150,
- R¹: gleiche oder verschiedene aliphatische oder aromatische Kohlenwasserstoffreste sind,
- R⁴: - (Y)[O(C₂H_{4-b}(R³)_{b}O)_{c} (C_{d}H_{2d}O)ₑ]_{f}H

ist, mit der Bedeutung
Y (f + 1)-bindiger, gegebenenfalls verzweigter Kohlenwasserstoffrest mit 3 bis 12 C-Atomen,
b 1 bis 3,
c 0 bis 20,
d 2 bis 4,
e 0 bis 20,
f 1 bis 4,
ist, mit organischen Carbonsäureanhydriden der allgemeinen Formel 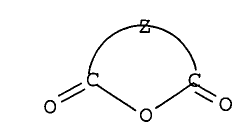 wobei
- Z: zweiwertiger Kohlenwasserstoffrest, ausgewählt aus der Gruppe

-(CH₂)_{g}-

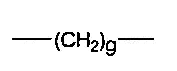

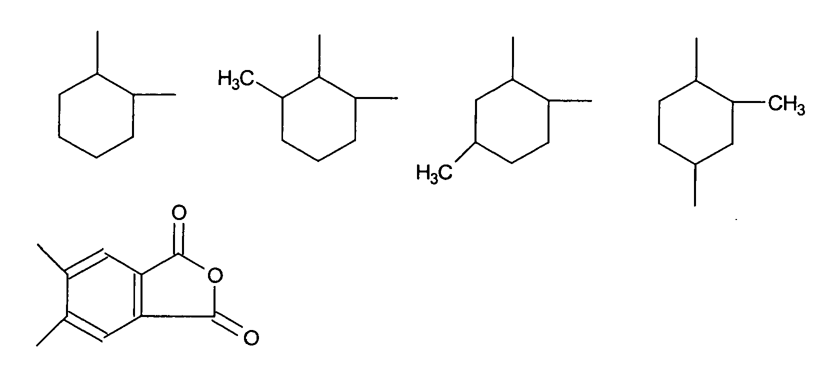

mit
g 1 bis 12 umsetzt.

Beispiele erfindungsgemäßer Substanzen sind: 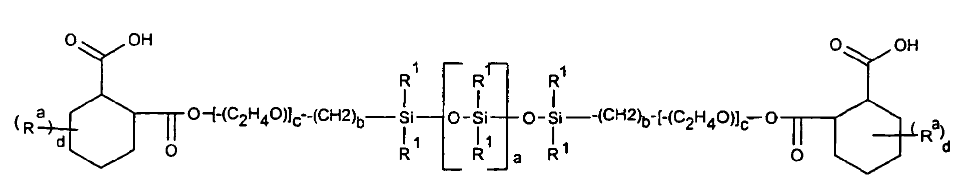 worin R^{a} gleich oder verschieden und H, C₁-C₄-Alkylrest, und d = 1-4 sein kann.

| Verbindung | a = | b = | c = | R = |
|---|---|---|---|---|
| 1 | 10 | 6 | 0 | Me |
| 2 | 20 | 6 | 0 | Me |
| 3 | 30 | 6 | 0 | Me |
| 4 | 70 | 6 | 0 | Me |
| 5 | 20 | 3 | 0 | Me |
| 6 | 30 | 3 | 0 | Me |
| 7 | 30 | 3 | 0 | Me |
| 8 | 30 | 6 | 4 | Me |

Zur Erläuterung der Erfindung dienen die folgenden Synthesebeispiele.

### Beispiel 1:

### Anlagerung von Hexahydrophthalsäureanhydrid an ein lineares hydroxyfunktionelles Siloxan:

In einem Dreihalskolben, der mit einem Intensivkühler, Thermometer und Tropftrichter sowie einem Stickstoffanschluss ausgerüstet ist, werden in einer Stickstoffatmosphäre 92 g Hexahydrophthalsäureanhydrid und 908 g eines linearen hydroxyfunktionellen Siloxans der allgemeinen Formel (II): 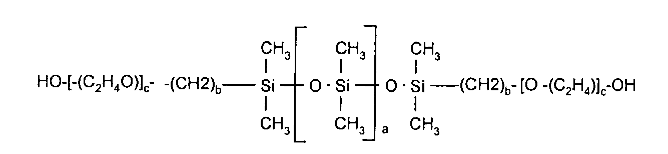 mit einer Hydroxylzahl von 45 mg KOH/g und einer Viskosität von 85 mPas gemischt. Die Lösung wird auf 120 °C aufgeheizt und bei dieser Temperatur 6 Stunden gerührt. Das Produkt wird nach dem Abkühlen auf Raumtemperatur filtriert. Es wird ein klares, flüssiges Produkt mit einer Säurezahl von 40 mg KOH/g und einer Viskosität von 550 mPas erhalten.

Gemäß ²⁹Si-NMR- und ¹³C-NMR-spektroskopischer Resultate besitzt das Endprodukt nachfolgende Struktur (III):

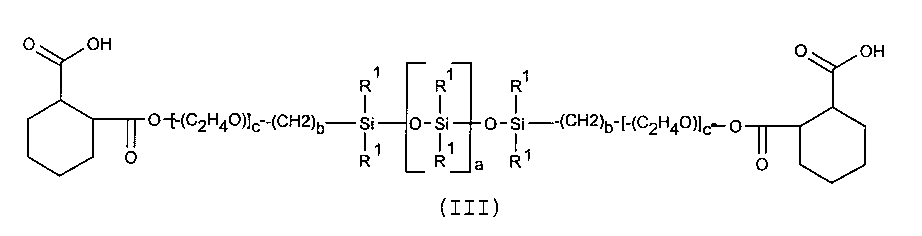

### Beispiel 2:

### Anlagerung Hexahydrophthalsäureanhydrid an ein lineares hydroxyfunktionelles Siloxan:

In einem Dreihalskolben, der mit einem Intensivkühler, Thermometer und Tropftrichter sowie einem Stickstoffanschluss ausgerüstet ist, werden in einer Stickstoffatmosphäre 226,3 g Hexahydrophthalsäureanhydrid und 773,7 g eines linearen hydroxyfunktionellen Siloxans der allgemeinen Formel (II) mit einer Hydroxylzahl von 130 mg KOH/g und einer Viskosität von 70 mPas gemischt. Die Lösung wird auf 120 °C aufgeheizt und bei dieser Temperatur 6 Stunden gerührt. Das Produkt wird nach dem Abkühlen auf Raumtemperatur filtriert. Es wird ein klares, flüssiges Produkt mit einer Säurezahl von 115 mg KOH/g und einer Viskosität von 270 mPas erhalten.

Gemäß ²⁹Si-NMR- und ¹³C-NMR-spektroskopischer Ergebnisse besitzt das Endprodukt die allgemeine Struktur (III).

### Beispiel 3:

### Anlagerung Hexahydrophthalsäureanhydrid an ein lineares hydroxyfunktionelles Siloxan:

In einem Dreihalskolben, der mit einem Intensivkühler, Thermometer und Tropftrichter sowie einem Stickstoffanschluss ausgerüstet ist, werden in einer Stickstoffatmosphäre 48,5 g Hexahydrophthalsäureanhydrid und 951,5 g eines linearen hydroxyfunktionellen Siloxans der allgemeinen Formel (II) mit einer Hydroxylzahl von 17 mg KOH/g und einer Viskosität von 155 mPas gemischt. Die Lösung wird auf 120 °C aufgeheizt und bei dieser Temperatur 6 Stunden gerührt. Das Produkt wird nach dem Abkühlen auf Raumtemperatur filtriert. Es wird ein klares, flüssiges Produkt mit einer Säurezahl von 16 mg KOH/g und einer Viskosität von 610 mPas erhalten.

Gemäß ²⁹Si-NMR- und ¹³C-NMR-spektroskopischer Ergebnisse besitzt das Endprodukt die allgemeine Struktur (III).

Die erfindungsgemäßen carboxyfunktionellen Polysiloxane werden zur Anwendung als Additiv in einem Gewichtsanteil zwischen 0,01 und 20 % in eine wässrige oder lösemittelhaltige Formulierung eingearbeitet. Die Anwendung erfindungsgemäßer carboxyfunktioneller Polysiloxane kann in Lösung oder als Emulsion erfolgen. Weitere Bestandteile der Formulierung neben dem Lösemittel und carboxyfunktionellen Polysiloxan in der Formulierung können beispielsweise Emulgatoren, Paraffin- und Mineralöle sein.

Mit der Verwendung der erfindungsgemäßen carboxyfunktionellen Polysiloxane erzielt man eine hervorragende Hydrophobierwirkung bei gleichzeitiger Verbesserung der Griffqualität. Dies wird ermöglicht durch das besondere Bauprinzip der erfindungsgemäßen carboxyfunktionellen Polysiloxane. Dabei ist die lange ununterbrochene Siloxankette für die charakteristischen Eigenschaften als Lederbehandlungsmittel verantwortlich. Die Wahl der organischen Einheiten an den Kettenenden bewirkt günstige Löse- und Emulgiereigenschaften für die Anwendung aus wässrigen oder lösemittelhaltigen Formulierungen wobei die Carboxygruppen in der Lage sind mit den positiv geladenen Zentren an der Oberfläche des Leders Wechselwirkungen einzugehen.

### Anwendungstechnischer Vergleich:

Lederhydrophobierungsmittel werden idealerweise aus wässrigen Formulierungen (5 bis 30 %) unter Einsatz von Emulgatoren und standardisierten Bedingungen wie Temperatur und pH-Wert appliziert.

Zur Bestimmung der Hydrophobierwirkung werden 5 % Lösungen der erfindungsgemäßen Verbindungen (Beispiele 1 bis 3) in Petrolether hergestellt. 6 x 6 cm große Lederstücke werden 2 Stunden in ein Schraubdeckelglas gegeben, das mit 300 ml der obigen Lösung gefüllt ist. Nach der Einwirkungszeit wird das Lederstück jeweils bei 50 °C getrocknet und gewogen. Anschließend wird das imprägnierte Lederstück 60 min in 300 ml Wasser gelagert. Die Wasseraufnahme wird nach Entfernung anhaftender Wassertropfen durch Wägung bestimmt:

Die Gewichtsdifferenz verursacht durch die Wasseraufnahme ist in %, bezogen auf das trockene imprägnierte Leder, angegeben.

Die Ergebnisse sind in der nachfolgenden Tabelle 1 aufgeführt:

**Tabelle 1:**

| Additiv | Auswaage II (%) |
|---|---|
| Vergleichsprobe unbehandelt | 96 |
| 1 | 63 |
| 3 | 56 |
| 4 | 32 |
| 8 | 64 |

Wie ersichtlich, wird das Wasseraufnahmevermögen von Leder nach der Behandlung mit den erfindungsgemäßen linearen carboxyfunktionellen Organosiloxanylderivaten deutlich herabgesetzt.

## Patentansprüche

1. Lineare carboxyfunktionelle Organosiloxanverbindungen der allgemeinen Formel (I) 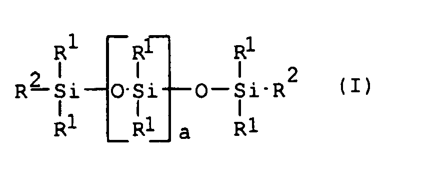 worin
a 1 bis 150,
R¹ gleiche oder Verschiedene aliphatische oder aromatische Kohlenwasserstoffreste sind,
R² -(Y) [O(C₂H_{4-b}(R³)_{b}O)_{c}(C_{d}H_{2d}O)ₑ]_{f}X
ist, mit der Bedeutung
Y (f + 1)-bindiger, gegebenenfalls verzweigter Kohlenwasserstoffrest mit 3 bis 12 C-Atomen,
b 1 bis 3,
c 0 bis 20,
d 2 bis 4,
e 0 bis 20,
f 1 bis 4,
R³ R¹,
X C(O)-Z-CO₂H ist,
Z zweiwertiger Kohlenwasserstoffrest, ausgewählt aus der Gruppe
-(CH₂)_{g}- 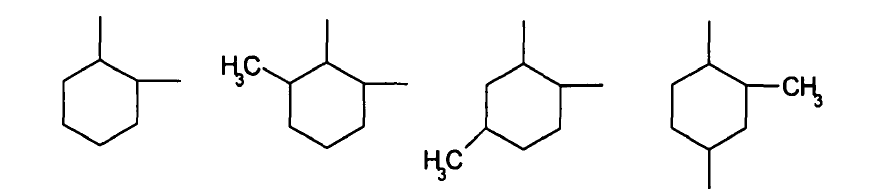 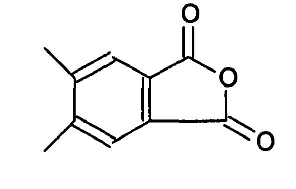
mit
g 1 bis 12, ist.

2. Carboxyfunktionelle Polysiloxane nach Anspruch 1, **dadurch gekennzeichnet, dass** der Rest R² für blockweise gemischte Polyetherreste steht.

3. Carboxyfunktionelle Polysiloxane nach Anspruch 1, **dadurch gekennzeichnet, dass** R¹ gleich H und/oder Methyl ist.

4. Carboxyfunktionelle Polysiloxane nach Anspruch 1, **dadurch gekennzeichnet, dass** a einen Wert von 10 bis 200 hat.

5. Verfahren zur Herstellung von carboxyfunktionellen Polysiloxanen nach Anspruch 1, **dadurch gekennzeichnet, dass** man hydroxyfunktionelle Siloxane der allgemeinen Formel 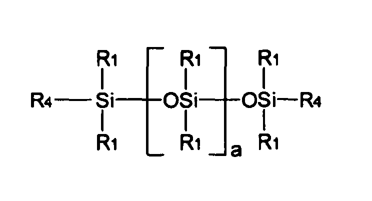 worin
a 1 bis 150,
R¹ gleiche oder verschiedene aliphatische oder aromatische Kohlenwasserstoffreste sind,
R⁴ -(Y) [O(C₂H_{4-b}(R³)_{b}O)_{c}(C_{d}H_{2d}O)ₑ]_{f}H
ist, mit der Bedeutung
Y (f + 1)-bindiger, gegebenenfalls verzweigter Kohlenwasserstoffrest mit 3 bis 12 C-Atomen,
b 1 bis 3,
c 0 bis 20,
d 2 bis 4,
e 0 bis 20,
f 1 bis 4,
ist,
mit organischen Carbonsäureanhydriden der allgemeinen Formel 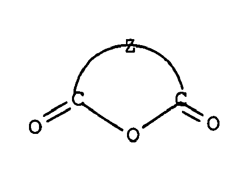 wobei
Z zweiwertiger Kohlenwasserstoffrest, ausgewählt aus der Gruppe
-(CH₂)_{g}- 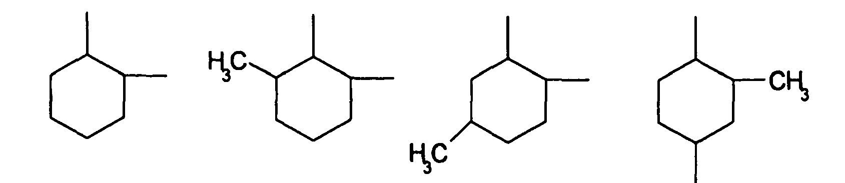 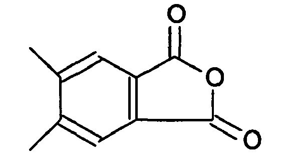
mit
g 1 bis 12, umsetzt.

6. Verwendung der carboxyfunktionellen Polysiloxane nach Anspruch 1, als Zusatzstoff in Behandlungsmitteln in Mengen von 0,01 bis 50,0 Gew.-%, bezogen auf die Formulierung, zur Behandlung der Oberfläche von Leder.

## Claims

1. Linear carboxy-functional organosiloxane compound of the general formula (I) 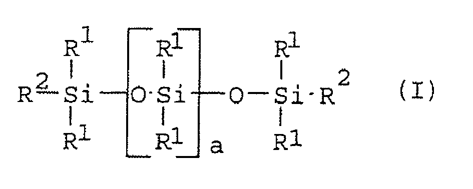 in which
a is from 1 to 150,
R¹ are identical or different aliphatic or aromatic hydrocarbon radicals,
R² is -(Y) [O(C₂H_{4-b}(R³)_{b}O)_{c}(C_{d}H_{2d}O)ₑ]_{f}X,
where
Y is an (f + 1)-valent, optionally branched hydrocarbon radical having 3 to 12 C atoms,
b is from 1 to 3,
c is from 0 to 20,
d is from 2 to 4,
e is from 0 to 20,
f is from 1 to 4,
R³ is R¹,
X is C(O)-Z-CO₂H and
Z is a divalent hydrocarbon radical selected from the group consisting of
-(CH₂)_{g}- 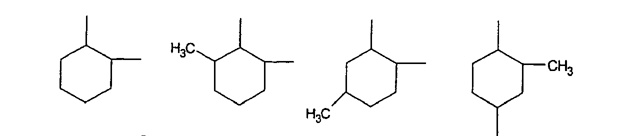 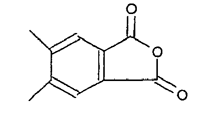
where
g is from 1 to 12.

2. Carboxy-functional polysiloxane according to Claim 1, **characterized in that** the radical R² is a polyether radical comprising mixed blocks.

3. Carboxy-functional polysiloxane according to Claim 1, **characterized in that** R¹ is H and/or methyl.

4. Carboxy-functional polysiloxane according to Claim 1, **characterized in that** a has a value of from 10 to 200.

5. Process for the preparation of carboxy-functional polysiloxanes according to Claim 1, **characterized in that** hydroxy-functional siloxanes of the general formula 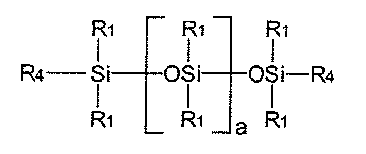 in which
a is from 1 to 150,
R¹ are identical or different aliphatic or aromatic hydrocarbon radicals,
R⁴ is -(Y) [O(C₂H_{4-b}(R³)_{b}O)_{c}(C_{d}H_{2d}O)ₑ]_{f}H,
where
Y is an (f + 1)-valent, optionally branched hydrocarbon radical having 3 to 12 C atoms,
b is from 1 to 3,
c is from 0 to 20,
d is from 2 to 4,
e is from 0 to 20 and
f is from 1 to 4,
are reacted with organic carboxylic anhydrides of the general formula 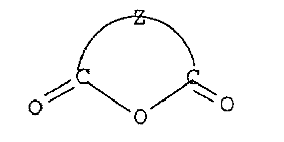 in which
Z is a divalent hydrocarbon radical selected from the group consisting of
-(CH₂)_{g}- 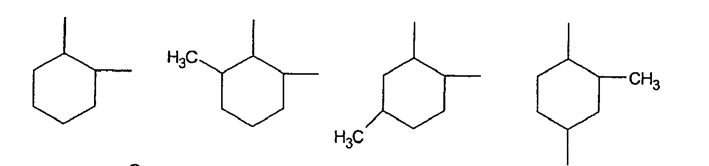 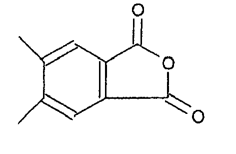
where
g is 1 to 12.

6. Use of the carboxy-functional polysiloxanes according to Claim 1 as an additive in treatment compositions in amounts of from 0.01 to 50.0% by weight, based on the formulation, for the treatment of the surface of leather.

## Revendications

1. Composés organosiloxane linéaires à fonction carboxy de formule générale (I) 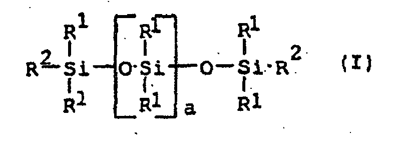 dans laquelle
a vaut de 1 à 150,
R¹ représente des radicaux hydrocarbonés aliphatiques ou aromatiques, identiques ou différents,
R² représente un groupe -(Y)[O(C₂H_{4-b}(R³)_{b}O)_{c}(C_{d}H_{2d}O)e]_{f}X, dans lequel
Y représente un radical hydrocarboné éventuellement ramifié, à (f + 1) liaisons, renfermant de 3 à 12 atomes de carbone,
b vaut de 1 à 3,
c vaut de 0 à 20,
d vaut de 2 à 4,
e vaut de 0 à 20,
f vaut de 1 à 4,
R³ représente un groupe R¹,
X représente un groupe C(O)-Z-CO₂H,
Z représente un radical hydrocarboné bivalent, choisi parmi le groupe
-(CH₂)_{g}- 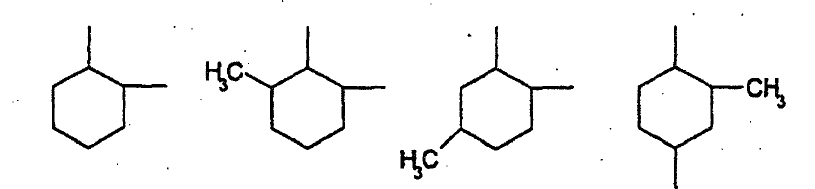 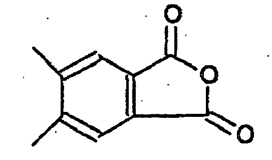
où
g vaut de 1 à 12.

2. Polysiloxanes à fonction carboxy selon la revendication 1, **caractérisés en ce que** le radical R² représente des radicaux polyéther à blocs mixtes.

3. Polysiloxanes à fonction carboxy selon la revendication 1, **caractérisés en ce que** R¹ représente un atome d'hydrogène et/ou un groupe méthyle.

4. Polysiloxanes à fonction carboxy selon la revendication 1, **caractérisés en ce que** a présente une valeur de 10 à 200.

5. Procédé de préparation de polysiloxanes à fonction carboxy selon la revendication 1, **caractérisé en ce que** des siloxanes à fonction hydroxy de formule générale 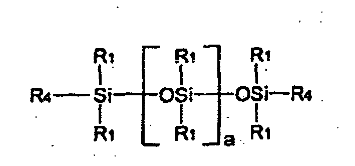 dans laquelle
a vaut de 1 à 150,
R¹ représente des radicaux hydrocarbonés aliphatiques ou aromatiques, identiques ou différents,
R⁴ représente un groupe -(Y)[O(C₂H_{4-b}(R³)_{b}O)_{c}(C_{d}H_{2d}O)e]_{f}X, dans lequel
Y représente un radical hydrocarboné éventuellement ramifié, à (f + 1) liaisons, renfermant de 3 à 12 atomes de carbone,
b vaut de 1 à 3,
c vaut de 0 à 20,
d vaut de 2 à 4,
e vaut de 0 à 20,
f vaut de 1 à 4,
sont mis à réagir avec des anhydrides d'acides carboxyliques organiques de formule générale 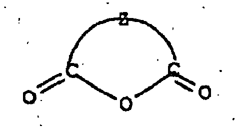 dans laquelle
Z représente un radical hydrocarboné bivalent, choisi parmi le groupe
-(CH₂)_{g}- 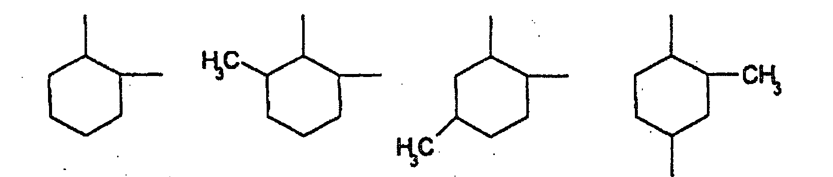 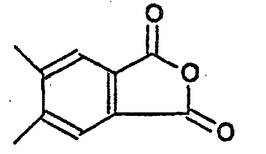
où
g vaut de 1 à 12.

6. Utilisation des polysiloxanes à fonction carboxy selon la revendication 1, en tant qu'additif dans des compositions de traitement en des quantités de 0,01 à 50,0 % en poids, par rapport à la formulation, pour le traitement de surfaces de cuir.
